# EUROPEAN PATENT SPECIFICATION

(11) **EP 0 599 415 B1**
(45) Date of publication and mention of the grant of the patent: **29.01.1997**
(21) Application number: 93203245.1
(22) Date of filing: 18.11.1993
(51) Int. Cl.: C08K 3/04, C08L 73/00

(54) **Polyketone polymer composition**
Polyketon-Polymerzusammensetzung
Composition polymérique de polycétane

(30) Priority: 20.11.1992 US 979681
(43) Date of publication of application: 01.06.1994
(73) Proprietor: SHELL INTERNATIONALE RESEARCH MAATSCHAPPIJ B.V., 2596 HR Den Haag (NL)
(72) Inventor: Chatterjee, Ananda Mohan, Katy, Texas 77450 (US); Weinkauf, Donald Hill, Houston, Texas 77007 (US)

(56) References cited:
- US-A- 4 321 334

## Description

This invention relates to a polymer composition comprising a semi-crystalline linear alternating polyketone polymer and a nucleating agent.

Polymers of carbon monoxide and olefinically unsaturated compounds, generally referred to as polyketones, are well known in the art. The polyketone polymers of the subject invention are of a specific linear alternating type. Such polymers have utility as premium thermoplastics in the manufacture of a wide variety of shaped articles.

The addition of a nucleating agent to a semicrystalline polymer, to promote crystallization of the polymer from the melt, is also well known in the art. Nucleating agents allow faster processing of the polymer and provide a more uniform microstructure because smaller spherulites form upon melt crystallization. Products moulded from polymers containing a nucleating agent generally exhibit improved physical and mechanical properties.

The use of foreign materials as nucleating agents is highly selective in that there is no universal nucleating agent for all polymers. A nucleating agent effective for one polymer may be ineffective for even a closely related polymer. Similarly, a compound closely related to an effective nucleating agent for a given polymer, may be ineffective in that same polymer.

In general, the efficacy of a nucleating agent in a polymer is indicated by an increase in the crystallization temperature and by a higher crystallization rate, preferably with the nucleating agent being present at a low level of addition. For the production of moulded articles, faster crystallization rates allow higher production rates. It is therefore an object of this invention to provide an effective nucleating agent for a polyketone polymer.

It has now surprisingly been found that graphitic carbon, which has been used as a nucleating agent in polybutylene (US-A-4 321 334), acts as an effective nucleating agent when blended into polyketone polymers. The polyketone samples thus obtained also exhibit favourable mechanical and barrier properties. The present find is indeed unexpected because many other, well known, commercially applied nucleating agents for polyolefins were found to be ineffective in polyketone polymers. The addition of most of these compounds to polyketone polymers even led to a decrease, instead of an increase, of the crystallisation temperature.

The present invention may be defined as relating to a polymer composition comprising a semi-crystalline linear alternating polyketone polymer and an effective quantity of a nucleating agent which is a substantially graphitic, non-turbostratic carbon.

The invention may also be defined as relating to a method of increasing the crystallization rate of a semi-crystalline linear alternating polyketone polymer by adding to the polyketone polymer an effective quantity of a substantially graphitic, non-turbostratic carbon.

Finally the invention relates to an article of manufacture comprising a polymer composition according to this invention.

The polyketone polymers of this invention are semi-crystalline thermoplastic polymers of a linear alternating structure and have in their polymer chains one monomer unit originating in carbon monoxide for each monomer unit originating in an ethylenically unsaturated compound. The alternating structure implies that these monomer units occur substantially in an alternating arrangement. Hereinafter these polymers may simply be referred to as polyketone polymers.

The ethylenically unsaturated compounds may contain exclusively carbon and hydrogen atoms, but they may also contain heteroatoms, such as in methyl acrylate, vinyl acetate, ethyl vinyl ether and N-vinylpyrrolidone. The ethylenically unsaturated compounds are preferably hydrocarbons, suitably having up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene.

The preferred polyketone polymers are copolymers of carbon monoxide and ethylene or terpolymers of carbon monoxide, ethylene, and a second ethylenically unsaturated hydrocarbon of at least 3 carbon atoms, particularly an α-olefin such as propylene. When the preferred polyketone terpolymers are employed, there will be within the terpolymer at least 2 units derived from a monomer of ethylene for each unit derived from a monomer of the second hydrocarbon. Preferably, there will be from 10 units to 100 units derived from a monomer of ethylene for each unit derived from a monomer of the second hydrocarbon.

The polymer chain of the preferred polyketone polymers can be represented by the general formula 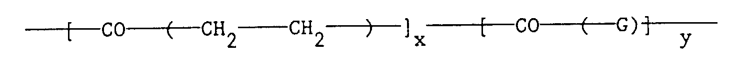 wherein G is a monomer unit derived from the ethylenically unsaturated hydrocarbon of at least 3 carbon atoms polymerized through the ethylenic unsaturation, preferably propylene, and the ratio of x:y is at least 2:1. When copolymers of carbon monoxide and ethylene are employed in the compositions of the invention, there will be no second hydrocarbon present and the copolymers are represented by the above formula wherein y is zero. When y is other than zero, i.e., terpolymers are employed, the ―CO(̵CH₂―CH₂)̵ units and the ―CO(̵G)̵ units are found randomly throughout the polymer chain, and preferred ratios of x:y are from 10:1 to 100:1. The end groups of the polymer chain will depend upon which materials were present during the production of the polymer and whether or how the polymer was purified. The precise nature of the end groups does not appear to influence the properties of the polymer to any considerable extent, so the polymers are fairly represented by the formula for the polymer chain as depicted above.

The properties of polyketone polymer are greatly influenced by the molecular purity of the polymer, as measured by the extent to which the polymer contains the monomer units originating in carbon monoxide and the monomer units originating in the ethylenically unsaturated compound. A polymer of lower carbon monoxide content than 50 mol% cannot exhibit the linear alternating nature of the above formula. A polymer made by other methods than referred to below, such as by free radical polymerization, will not typically have the regular, linear alternating structure of the polyketone polymers of the invention.

The physical properties of the polyketone polymer may also depend, amongst others, upon the molecular weight (reflected, e.g., by the limiting viscosity number), whether the polymer is a copolymer or a terpolymer and, in the case of terpolymers, the nature and proportion of monomer units of a second unsaturated compound being present. Typical melting points for the polymers are from 175 °C to 300 °C, more typically from 210 °C to 270 °C. The polymers have preferably a limiting viscosity number (LVN), measured in m-cresol at 60 °C in a standard capillary viscosity measuring device, from 0.5 dl/g to 10 dl/g, more preferably from 0.8 dl/g to 4 dl/g.

U.S. 4,880,903 (Van Broekhoven et al.) discloses a linear alternating polyketone terpolymer of carbon monoxide, ethylene, and other olefinically unsaturated hydrocarbons, such as propylene. Processes for production of the polyketone polymers typically involve the use of a catalyst composition formed from a compound of a Group VIII metal selected from palladium, cobalt, or nickel, the anion of a strong non-hydrohalogenic acid, and a bidentate ligand of phosphorus, arsenic or antimony.

Two of the allotropic or isomeric forms of carbon are commonly known as graphite and carbon black (amorphous carbon). The graphite crystalline structure is formed from parallel layers of condensed planar six-member carbon rings. In a completely graphitic crystalline structure, the planar layers stack in three-dimensionally ordered parallel spacing, 0.33538 nm apart at room temperature. A range of intermediates lies between this pure graphite structure and a turbostratic structure, which exhibits no order between the layers, i.e. a two-dimensional crystal structure. As the degree of graphitization decreases the inter-layer spacing, or d spacing, increases from the pure graphite value of 0.33538 nm to the turbostratic value of 0.344 nm. As the planar layers move further apart, they assume progressively more random, though parallel, positions with respect to each other, such that the three-dimensional graphitic ordering is replaced by the two-dimensional turbostratic ordering.

The graphite nucleating agent of the invention is characterized as possessing, at least to a certain extent, a three-dimensional ordering of structure, and consequently, as non-turbostratic. The nucleating agent is further characterized as substantially graphitic, which may be defined by the inter-layer d spacing. The substantially graphitic nucleating agent has typically a d spacing of from 0.33538 nm (completely graphitic) to 0.340 nm. This range is believed to correspond to a graphitization percentage of 100% to 25%. Non-turbostratic carbon with a d spacing of from 0.33538 nm to 0.339 nm is preferred, with 0.33538 nm to 0.338 nm most preferred. The non-turbostratic carbon may be naturally occurring or synthetic.

In general, good dispersion within a polymer is preferred for the nucleating agent to be most effective. Dispersion may be facilitated by using a nucleating agent with a small particle size. The graphite nucleating agent of the invention typically has an average particle size greater than 0.1 µm. To facilitate good dispersion, a finely divided, or powdered graphite is preferred, for example, a graphite powder with 95 wt% of the particles being less than 200 µm in size. However, it is preferred that the powder has a particle size distribution of 95 wt% of the particles being less than 55 µm in size and 50 wt% being less than 20 µm.

The precise percentage of the graphite nucleating agent to be employed in the polyketone polymer compositions of the invention will depend upon the anticipated end use for the material. If desired, the compositions may contain from 0.005 wt% to 2.0 wt% of the graphite nucleating agent, based on the total composition. Compositions containing from 0.01 wt% to 0.5 wt%, based on total composition of the graphite to the polyketone polymer, are typical, with 0.01 wt% to 0.2 wt% being preferred.

This invention is also directed to a method for increasing the crystallization rate of a polyketone composition which comprises adding to the polyketone polymer an effective quantity of a graphitic carbon nucleating agent as described hereinbefore. The method used to mix the components is not critical. Typically the method allows the graphite nucleating agent to be well dispersed in the polyketone polymer. Conventional melt processing equipment can be used to combine the nucleating agent with the polyketone polymer.

The compositions of the invention may also include other additives such as antioxidants and stabilizers, fillers and reinforcements, mould release agents, fire retarding chemicals, colorants, and other materials which are designed to improve the processability of the polymer or the properties of the resulting blend. Such additives are added to the polymer concurrently with, prior to, or subsequent to the addition of the graphite nucleating agent.

The invention is further illustrated by the following Examples which should not be regarded as limiting.

### Example 1

A linear alternating copolymer of carbon monoxide and ethylene was produced in the presence of a catalyst composition formed from palladium acetate, trifluoroacetic acid and 1,3-bis[bis(2-methoxyphenyl)phosphino]propane. The polyketone polymer had a melting point of 250 °C and an LVN of 1.95 dl/g when measured in m-cresol at 60 °C. Conventional additives were added to the polyketone polymer.

### Example 2

The polyketone copolymer of Example 1 was blended with a finely ground graphite powder (particle size distribution of 95 wt% less than 55 µm and 50 wt% less than 20 µm) with an interlayer spacing of 0.3372 nm. Samples containing various concentrations of graphite were prepared, as shown in Table 1.

Graphite powder at the 0.5 wt% and 1.0 wt% loadings was tumbled into the polymer. After drying for 48 hours at 65 °C, the blends were compounded at a melt temperature of 290 °C using a 30 mm extruder with an intensive mixing screw configuration. Other polymer compounds with lower weight fractions of graphite powder were prepared by simply dry blending the 1.0 wt% blend pellets obtained with neat polymer pellets in a subsequent melt processing step.

Samples for DSC testing were prepared by compression moulding the polymer pellets obtained into 0.762 mm (30 mil) plaques. Crystallization temperatures were measured using differential scanning calorimetry (DSC), employing sealed pan containers. The samples were first held at 50 °C above the melting point for two minutes and subsequently cooled at 20 °C/min. The crystallization temperature was reported as the peak of the crystallization exotherm during the cooling cycle. Results are shown in Table 1.

**Table 1**

| Graphite wt% | Crystallization temperature, °C |
|---|---|
| 0 | 200.3 |
| 0.05 | 207.4 |
| 0.1 | 207.4 |
| 0.2 | 208.9 |
| 0.5 | 209.5 |
| 1.0 | 209.3 |

The good nucleating efficiency of the graphite is demonstrated by the increase in crystallization temperature, maintained even at the lowest graphite loading (0.05 wt%). Typically, commercial nucleating agents are preferably used at levels of 0.03 to 0.3 wt%. The efficiency of nucleation at low loadings suggests that the graphite functions as a very effective nucleating agent for the polyketone polymer.

Crystallization kinetics were also determined through use of DSC techniques. Polymer samples were held at 300 °C for two minutes to ensure complete melting, then rapidly cooled to the desired crystallization temperature. Crystallization exotherms were measured as a function of time. The isothermal crystallization half-time was defined as the time at which 50% of the maximum level of crystallization attainable at the prevailing conditions was achieved. The crystallization half-time is a direct measure of the rate of crystallization in the polymer, where shorter crystallization half-times imply faster crystallization rates. Results for various crystallization temperatures are shown in Table 2.

**Table 2**

| Crystallization temperature, °C | Crystallization half-time, min | |
|---|---|---|
| | Polyketone (control) | Polyketone with 0.5 wt% graphite |
| 215.0 | 0.37 | - |
| 217.5 | 1.25 | - |
| 220.0 | 4.50 | 0.82 |
| 222.5 | 9.37 | 1.14 |
| 225.0 | - | 4.26 |
| 227.5 | - | 8.33 |

It is evident from the data in Table 2 that a graphite nucleating agent has a dramatic effect on the crystallization rate for the polyketone polymer. Crystallization half-times for the samples containing the graphite nucleating agent were reduced substantially relative to those for the respective control samples.

Specimens for mechanical property testing were prepared by injection moulding standard test specimens using a 250 ton injection moulding machine. Moulded specimens were stored over desiccant until tested. Mechanical testing was performed on dry as moulded samples. Tensile modulus, yield stress, elongation at yield, and notched Izod impact (at -30 °C) for the various samples are shown in Table 3.

**Table 3**

| Graphite wt% | Tensile modulus GPa (psi) | Yield stress MPa (psi) | Elongation at yield % | Izod impact at -30 °C J/m (ft-lbs/in) |
|---|---|---|---|---|
| 0 | 1.34 (193,800) | 86.0 (12,480) | 61 | 74.2 (1.39) |
| 0.05 | 1.39 (201,700) | 86.0 (12,470) | 61 | 65.7 (1.23) |
| 0.1 | 1.41 (204,300) | 86.7 (12,580) | 60 | 63.0 (1.18) |
| 0.2 | 1.41 (204,900) | 86.6 (12,560) | 60 | 66.2 (1.24) |
| 0.5 | 1.48 (214,200) | 88.2 (12,790) | 60 | 71.0 (1.33) |
| 1.0 | 1.49 (215,500) | 88.8 (12,880) | 59 | 74.8 (1.40) |

The addition of the graphite nucleating agent resulted in an increase in tensile modulus. The yield stress, elongation at yield, and Izod impact strength were maintained throughout the range of graphite addition. The samples exhibit a good balance of properties at graphite loading levels commonly used for nucleating agents.

### Example 3

A linear alternating terpolymer of carbon monoxide, ethylene, and propylene was produced in the presence of a catalyst composition formed from palladium acetate, trifluoroacetic acid and 1,3-bis[bis(2-methoxyphenyl)phosphino]propane. The polyketone polymer had a melting point of 221 °C and an LVN of 1.05 dl/g when measured in m-cresol at 60 °C. Conventional additives were added to the polyketone polymer.

### Example 4

The polyketone terpolymer of Example 3 was blended with a finely ground graphite powder (particle size distribution of 95 wt% less than 55 µm and 50 wt% less than 20 µm) with an interlayer spacing of 0.3372 nm. Samples containing 0.5 wt% and 1.0 wt% graphite were prepared by the methods described in Example 2, using a melt temperature of 240 °C.

Crystallization temperatures and crystallization rates were measured using the DSC techniques described in Example 2. Results are shown in Table 4. The good nucleating efficiency of the graphite was demonstrated by an increase in crystallization temperature.

**Table 4**

| Graphite (wt%) | Crystallization temperature, °C |
|---|---|
| 0 | 174.0 |
| 0.5 | 184.0 |
| 1.0 | 185.0 |

Crystallization kinetics were determined by the method described in Example 2, with the exception that polymer samples were held at 275 °C for two minutes to ensure complete melting. Results for various crystallization temperatures are shown in Table 5.

**Table 5**

| Crystallization temperature, °C | Crystallization half-time, min | |
|---|---|---|
| | Polyketone (control) | Polyketone with 0.5 wt% graphite |
| 190 | 1.00 | 0.14 |
| 195 | 2.91 | 0.39 |
| 198 | - | 1.18 |
| 200 | 12.41 | 2.12 |

It is evident from the data in Table 5 that the graphite nucleating agent has a dramatic effect on the crystallization rate for the polyketone polymer. Crystallization half-times for the samples containing a graphite nucleating agent were reduced substantially relative to those for the respective control samples.

Specimens for mechanical property testing were prepared by the same methods utilized in Example 2. Tensile modulus, yield stress, elongation at yield, and notched Izod impact (at -30°C) for the various samples are shown in Table 6.

**Table 6**

| Graphite wt% | Tensile modulus GPa (psi) | Yield stress MPa (psi) | Elongation at yield % | Izod impact at -30 °C J/m (ft-lbs/in) |
|---|---|---|---|---|
| 0 | 1.02 (147,600) | 66.1 (9,587) | 29 | 43.3 (0.81) |
| 0.5 | 1.05 (151,900) | 68.3 (9,910) | 27 | 40.6 (0.76) |
| 1.0 | 1.08 (156,000) | 68.7 (9,966) | 27 | 40.1 (0.75) |

The addition of the graphite nucleating agent resulted in an increase in tensile modulus and yield stress. The elongation at yield and Izod impact strength were essentially unchanged by graphite addition. The samples exhibit a good balance of properties even at graphite loading levels above those commonly used for nucleating agents.

### Example 5

A linear alternating terpolymer of carbon monoxide, ethylene, and propylene was produced in the presence of a catalyst composition formed from palladium acetate, trifluoroacetic acid and 1,3-bis[bis(2-methoxyphenyl)-phosphino]propane. The polyketone polymer had a melting point of 227 °C and an LVN of 1.66 dl/g when measured in m-cresol at 60 °C. Conventional additives were added to the polyketone polymer.

### Example 6

The polyketone polymer of Example 5 was blended with a graphite nucleating agent (of the invention), and a variety of commercially available polyolefin nucleating agents (not of the invention), all at 1 wt% loading. The graphite nucleating agent was a finely ground graphite powder (95 wt% less than 55 µm and 50 wt% less than 20 µm) with an interlayer spacing of 0.3372 nm.

The polymer powder of Example 5 was dried for 48 hrs under vacuum with a slight N₂ purge at 65 °C. The nucleating agents were dry tumbled with the polyketone polymer at 1 wt% just prior to compounding. The materials were compounded in a 15 mm extruder with an intensive mixing screw configuration. After a second drying procedure, the pellets were compression moulded into 0.762 mm (30 mil) plaques for analysis by DSC.

The DSC protocol was to hold the polyketone polymer in the melt state for two minutes at 275 °C and then cool at 50 °C/min to observe the crystallization temperature. The crystallization temperature was reported as the maximum in the crystallization exotherm on cooling. A second series of experiments was also conducted using a melt temperature of 300 °C. The results of the DSC testing are shown in Table 7.

**Table 7**

| Nucleating agent (1 wt%) | Crystallization temperature, °C¹⁾ | Crystallization temperature, °C²⁾ |
|---|---|---|
| None | 181 | 166 |
| Graphite | 190 | 175 |
| | | |
| Sodium bis(para-t-butylphenyl)phosphate | 177 | 152 |
| | | |
| Bis(p-methylbenzylidene)sorbitol | 182 | 167 |
| | | |
| 1,2-dihydroxyanthraquinone | 179 | 152 |
| | | |
| Sodium benzoate | (very poor melt appearance) | |
| | | |
| PA-80050³⁾ | 181 | 149 |

| | | |
|---|---|---|
| 1) Materials held at 275 °C for two minutes. | | |
| 2) Materials held at 300 °C for two minutes. | | |
| 3) PA-80050 is a mixture of sodium succinate, sodium sulphosuccinate and an unknown compound. PA-80050 is available from ICI. | | |

In both series of measurements the only material providing any significant increase in the crystallization temperature over the control is the graphite nucleating agent.

The comparative nucleating agents provided essentially no increase in crystallization temperature for the polyketone polymer. In most cases even a decrease in crystallization temperature was served.

### Example 7

The polyketone polymer of Example 3, and a blended sample of the polyketone and 0.5 wt% graphite, prepared as described in Example 2, were injection moulded into 222 cm³ (7.5 oz.) cups using a 250 ton injection moulding machine. The cups had an average wall thickness of 0.686 mm (27 mils).

The cups were filled with water, double seamed with an aluminium lid, maintained in a 50% relative humidity environment, and weighed periodically to determine water loss over time. Some of the samples were also subjected to a retort cycle in a benchtop sterilization unit with 1.05 bar (15 psi) overpressure. The retort temperature was increased until the internal temperature reached 120 °C, at which point the container was slowly cooled to ambient temperature. The total cycle required three hours. The water vapour transmission rates for these containers are shown in Table 8. The addition of graphite reduced the water vapour transmission rate of the polyketone polymer as measured both before and after retort.

**Table 8**

| Graphite wt% | Water vapour transmission rate, arbitrary units | |
|---|---|---|
| | Before retort | After retort |
| 0 | 1.00 ^{a)} | 1.55 |
| 0.5 | 0.88 | 1.33 |

| | | |
|---|---|---|
| ^{a)} By definition. | | |

## Claims

1. A polymer composition comprising a semi-crystalline linear alternating polyketone polymer and an effective quantity of a nucleating agent which is a substantially graphitic, non-turbostratic carbon.

2. A composition as claimed in claim 1, wherein the graphite nucleating agent is present in a quantity of from 0.01 to 0.5 wt%, based on the total polymer composition.

3. A composition as claimed in claim 2, wherein the graphite nucleating agent is present in a quantity of from 0.01 to 0.2 wt%, based on the total polymer composition.

4. A composition as claimed in any of claims 1-3, wherein the graphite nucleating agent has an inter-layer spacing of from 0.33538 to 0.339 nm.

5. A composition as claimed in claim 4, wherein the graphite nucleating agent has an inter-layer spacing of from 0.33538 to 0.338 nm.

6. A composition as claimed in any of claims 1-5, wherein the graphite nucleating agent has an average particle size greater than 0.1 µm.

7. A composition as claimed in any of claims 1-6, wherein the graphite nucleating agent has a particle size distribution of 95 wt% of the particles being less than 55 µm in size and 50 wt% being less than 20 µm.

8. A composition as claimed in any of claims 1-7, wherein the polyketone polymer is represented by the general formula 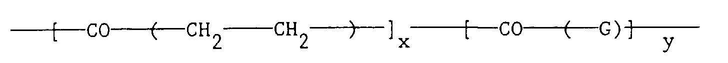 wherein G is a monomer unit derived from an α-olefin of at least 3 carbon atoms polymerized through the ethylenic unsaturation and the ratio of x:y is at least 2:1.

9. A composition as claimed in claim 8, wherein the ratio of x:y is from 10:1 to 100:1 and G is derived from propylene.

10. A composition as claimed in claim 8, wherein y is 0.

11. A method of increasing the crystallization rate of a semi-crystalline linear alternating polyketone polymer by adding to the polyketone polymer an effective quantity of a substantially graphitic, non-turbostratic carbon.

12. An article of manufacture comprising a composition as claimed in any of claims 1-10.

## Patentansprüche

1. Polymerzusammensetzung, enthaltend ein teilkristallines lineares alternierendes Polyketon-Polymer und eine wirksame Menge eines Nukleierungsmittels, bei dem es sich um im wesentlichen graphitischen, nichtturbostratischen Kohlenstoff handelt.

2. Zusammensetzung nach Anspruch 1, in der das Graphit-Nukleierungsmittel in einer Menge von 0,01 bis 0,5 Gew.-%, bezogen auf die gesamte Polymerzusammensetzung, enthalten ist.

3. Zusammensetzung nach Anspruch 2, in der das Graphit-Nukleierungsmittel in einer Menge von 0,01 bis 0,2 Gew.-%, bezogen auf die gesamte Polymerzusammensetzung, enthalten ist.

4. Zusammensetzung nach einem der Ansprüche 1-3, in der das Graphit-Nukleierungsmittel einen Schichtabstand von 0,33538 bis 0,339 nm aufweist.

5. Zusammensetzung nach Anspruch 4, in der das Graphit-Nukleierungsmittel einen Schichtabstand von 0,33538 bis 0,338 nm aufweist.

6. Zusammensetzung nach einem der Ansprüche 1-5, in der das Graphit-Nukleierungsmittel eine mittlere Teilchengröße über 0,1 µm aufweist.

7. Zusammensetzung nach einem der Ansprüche 1-6, in der das Graphit-Nukleierungsmittel eine Teilchengrößenverteilung aufweist, bei der 95 Gew.-% der Teilchen kleiner als 55 µm und 50 Gew.-% kleiner als 20 µm sind.

8. Zusammensetzung nach einem der Ansprüche 1-7, in der das Polyketonpolymer der allgemeinen Formel 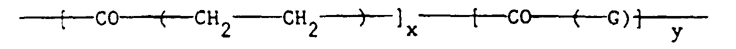 worin G für eine von einem α-Olefin mit mindestens drei Kohlenstoffatomen abgeleitete, über die ethylenische Ungesättigtheit polymerisierte Monomereinheit steht und das Verhältnis x:y mindestens 2:1 beträgt, entspricht.

9. Zusammensetzung nach Anspruch 8, in der das Verhältnis x:y 10:1 bis 100:1 beträgt und G sich von Propylen ableitet.

10. Zusammensetzung nach Anspruch 8, wobei y gleich null ist.

11. Verfahren zur Erhöhung der Kristallisationsgeschwindigkeit eines teilkristallinen linearen alternierenden Polyketon-Polymers, bei dem man dem Polyketon-Polymer eine wirksame Menge eines im wesentlichen graphitischen, nichtturbostratischen Kohlenstoffs zusetzt.

12. Fertigteil, enthaltend eine Zusammensetzung gemäß einem der Ansprüche 1-10.

## Revendications

1. Composition de polymère comprenant un polymère du type polycétone, alternant, linéaire, semicristallin et une quantité efficace d'un agent de nucléation qui est un carbone sensiblement graphitique, non turbostratique.

2. Composition suivant la revendication 1, caractérisée en ce que l'agent de nucléation en graphite est présent en une proportion de 0,01 à 0,5% en poids, sur base du poids de la composition de polymère totale.

3. Composition suivant la revendication 2, caractérisée en ce que l'agent de nucléation en graphite est présent en une proportion de 0,01 à 0,2% en poids, sur base du poids de la composition de polymère totale.

4. Composition suivant l'une quelconque des revendications 1 à 3, caractérisée en ce que l'agent de nucléation en graphite possède un espacement intercouche de 0,33538 à 0,339 nm.

5. Composition suivant la revendication 4, caractérisée en ce que l'agent de nucléation en graphite possède un espacement intercouche de 0,33538 à 0,338 nm.

6. Composition suivant l'une quelconque des revendications 1 à 5, caractérisée en ce que l'agent de nucléation en graphite possède un calibre moyen des particules supérieur à 0,1 µm.

7. Composition suivant l'une quelconque des revendications 1 à 6, caractérisée en ce que l'agent de nucléation en graphite possède une distribution granulométrique où 95% des particules ont un calibre inférieur à 55 µm et 50% des particules ont un calibre inférieur à 20 µm.

8. Composition suivant l'une quelconque des revendications 1 à 7, caractérisée en ce que le polymère du type polycétone est représenté par la formule générale 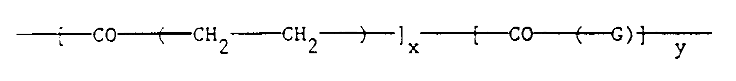 dans laquelle G est une unité monomérique qui dérive d'une α-oléfine qui comporte au moins trois atomes de carbone, polymérisée par l'insaturation éthylénique et le rapport x:y est d'au moins 2:1.

9. Composition suivant la revendication 8, caractérisée en ce que le rapport x:y varie de 10:1 à 100:1 et G dérive du propylène.

10. Composition suivant la revendication 8, caractérisée en ce que y est égal à zéro.

11. Procédé d'élévation de la vitesse de cristallisation d'un polymère du type polycétone alternant, linéaire, semicristallin, par l'addition au polymère du type polycétone d'une quantité efficace d'un carbone sensiblement graphitique, non turbostratique.

12. Article de fabrication comprenant une composition suivant l'une quelconque des revendications 1 à 10.
